# EUROPÄISCHE PATENTSCHRIFT

(11) **EP 1 151 569 B1**
(45) Veröffentlichungstag und Bekanntmachung des Hinweises auf die Patenterteilung: **18.11.2009**
(21) Anmeldenummer: 00910539.6
(22) Anmeldetag: 18.02.2000
(51) Int. Cl.: H04J 14/02, H04Q 11/00

(54) **ADD-DROP-MULTIPLEXEREINRICHTUNG UND OPTISCHES WELLENLÄNGEN-MULTIPLEX-ÜBERTRAGUNGSSYSTEM**
ADD-DROP-MULTIPLEXER AND OPTICAL WAVELENGTH DIVISION MULTIPLEX TRANSMISSION SYSTEM
DISPOSITIF MULTIPLEXEUR A INSERTION-EXTRACTION ET SYSTEME DE TRANSMISSION OPTIQUE A MULTIPLEXAGE PAR REPARTITION EN LONGUEUR D'ONDE (WDM)

(30) Priorität: 18.02.1999 DE 19906813; 24.01.2000 DE 10002851
(43) Veröffentlichungstag der Anmeldung: 07.11.2001
(73) Patentinhaber: Nokia Siemens Networks GmbH & Co. KG, 81541 München (DE)
(72) Erfinder: STOLL, Detlef, D-81377 München (DE); LEISCHING, Patrick, D-80802 München (DE); BOCK, Harald, D-81479 München (DE); JÄGER, Hubert, D-82049 Pullach (DE)
(86) Internationale Anmeldenummer: PCT/DE2000/000463
(87) Internationale Veröffentlichungsnummer: WO 2000/049752

(56) Entgegenhaltungen:
- WO-A-99/65174
- DE-A- 19 936 421
- US-A- 5 612 805
- US-A- 5 748 350
- US-A- 5 774 606
- US-A- 5 841 556

## Beschreibung

Die Erfindung betrifft eine konfigurierbare Add-Drop-Multiplexereinrichtungen und ein mit diesen realisiertes optisches Wellenlängen-Multiplex(WDM)-übertragungssystem.

In rein optischen WDM-Netzen werden Übertragungskanäle mit unterschiedlichen Wellenlängen zur Herstellung von Datenverbindungen genutzt. Auf Wunsch von Kunden sollen vom Netzbetreiber Verbindungen zwischen beliebigen Anschlußpunkten zur Verfügung gestellt werden. Zur Herstellung dieser Verbindungen wurden bisher elektronisch arbeitende Cross-Connectoren/Durchschalteinrichtungen verwendet. Dasselbe Prinzip kann auch prinzipiell für rein optisch arbeitende Netze verwendet werden. Problematisch und sehr kostenintensiv ist hier jedoch die Verwendung von fernkonfigurierbaren optischen Schalteinrichtungen. Solche sind beispielsweise aus DE 19 94 302 A1 bekannt.

Aus US 5,748,350 sind optische Multipexer/Demultiplexer bekannt, die mit Hilfe von Filtern und Zirkulatoren realisiert sind und einzelne optische Kanäle zu einem WDM-Signal zusammenfassen oder ein WDM-Signal in einzelne optische Kanäle aufteilen.

Aufgabe der Erfindung ist es daher, eine mit geringerem Aufwand realisierbare konfigurierbare Add-Drop-Multiplexereinrichtung und ein WDM-Übertragungssystem anzugeben.

Diese Aufgabe wird durch einen Add-Drop-Multiplexereinrichtung gemäß Patentanspruch 1 gelöst. In einem unabhängigen Anspruch ist ein zugehöriges Übertragungssystem angegeben. Vorteilhafte Weiterbildungen sind in den Unteransprüchen angegeben.

Bei der Erfindung wird eine modulare Bauweise verwendet, bei der je nach Bedarf unterschiedliche Modultypen eingesetzt werden können. In der Regel wird nur ein geringer Teil der geschalteten Verbindungen häufig neu konfiguriert werden, während in der Regel der größte Teil der Verbindungen statisch ist und nie oder äußerst selten neu konfiguriert werden muss. Entsprechend hoch ist der Kostenvorteil.

Vorteilhaft ist zunächst eine Aufteilung des WDM-Signals in mehrere Kanalgruppen, von denen mindestens eine von einem WDM-Demultiplexer in einzelne optische Kanäle aufgeteilt werden, die prinzipiell einzeln abzweigbar oder durchschaltbar sind. Einer dieser Kanalgruppen sind beispielsweise "statisch" verschaltete Kanäle für Langzeitverbindung zugeordnet, die einem technisch einfach ausgeführtem Modul zugeführt sind, während eine andere Kanalgruppe als Kurzzeitverbindungen dienende Kanäle enthält, die ständig neu verschaltet werden, was in einem anderen Modultyp mit entsprechend aufwendigeren Umschalteinrichtungen erfolgt.

Besonders vorteilhaft ist der Einsatz der Erfindung in Ringnetzen, bei denen ein erheblicher Teil der Kanäle lediglich durchgeschaltet wird. Hier besteht dann das entsprechende Modul nur aus einer optischen Verbindungsleitung.

Neben der Verwendung von Modulen mit optischen Schaltmatrizen zur Realisierung von Add-Drop-Funktionen kann als Add-Drop-Einheit auch eine Kombination von Zirkulatoren und abstimmbaren Filtern verwendet werden.

Besonders vorteilhaft ist die Verwendung von abstimmbaren steuerbaren Filtern, deren Transmissions- und Reflexionsdämpfung bespielsweise thermisch steuerbar sind und hierdurch eine Neukonfiguration ermöglichen, ohne den Betrieb auf den durchgeschalteten Kanälen zu stören.

Zusätzlich werden vorteilhaft erfindungsgemäß mit Hilfe eines weiteren Modultyps fernkonfigurierbare Drop&Continue-Kanäle zur Realisierung von Broadcast-Funktionalitäten eingesetzt.

Ausführungsbeispiele der Erfindung werden anhand von Figuren näher erläutert.

Es zeigen:
- Figur 1: eine Add-Drop-Multiplexereinrichtung für statische und fernkonfigurierbare Verbindungen,
- Figur 2: ein Frequenzschema eines optischen WDM-Signals,
- Figur 3: ein Ringnetz und
- Figur 4: eine Variante des Add-Drop-Multiplexers.
- Figur 5: eine Variante eines Drop&Continue-Moduls.
- Figur 6: eine weitere Variante eines Drop&Continue-Moduls.
- Figur 7: eine vereinfachte Realisierungsform eines Drop&Continue-Moduls.

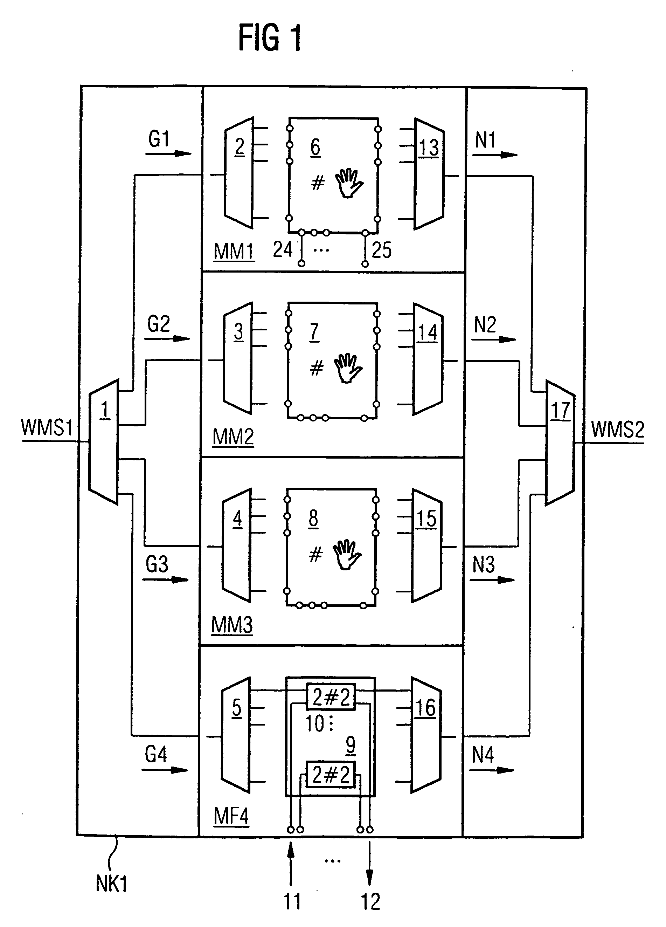

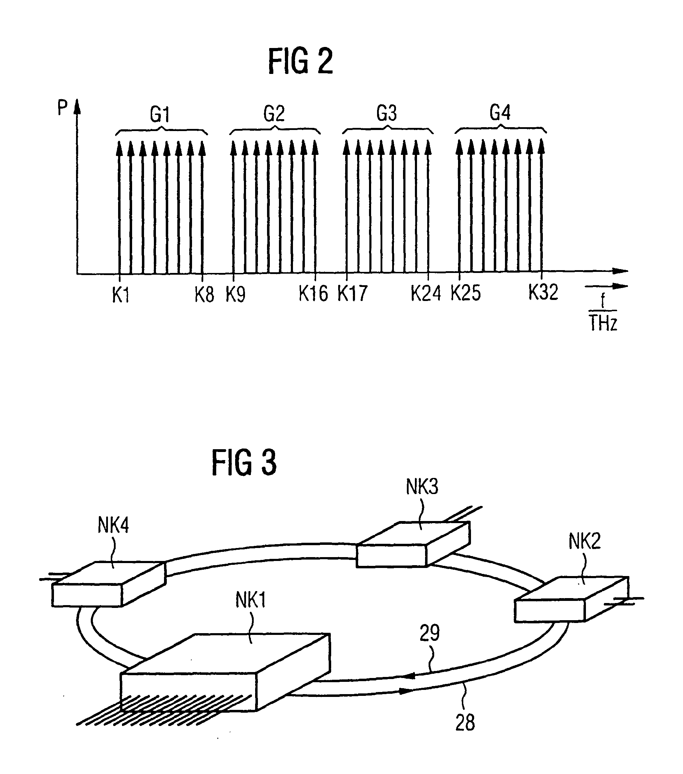

In **Figur 1** ist eine Add-Drop-Multiplexereinrichtung (häufig kurz als Add-Drop-Multiplexer oder Netzknoten, Cross-Connector oder Durchschalteeinrichtung bezeichnet ) NK1 dargestellt. Ein ankommendes optisches WDM-Signal WMS1 wird zunächst einem Gruppenfilter 1 zugeführt. Dieses teilt das Signal WMS1 in vier verschiedene Kanalgruppen G1 bis G4 entsprechend **Figur 2** auf. Die statischen Verbindungen werden den Kanalgruppen G1 bis G3 zugeordnet, während sämtliche kurzfristigen Verbindungen der vierten Kanalgruppe G4 zugeordnet sind. Jeder dieser Kanalgruppen ist jeweils ein Modul MM1 bis MM3 und MF4 zugeordnet, um bestimmte Kanäle abzweigen und einzufügen sowie andere Kanäle durchschalten zu können. Hierbei ist es aus Aufwandsgründen zweckmäßig und bei bestimmten Ausführungsformen erforderlich, einer Kanalgruppe frequenzmäßig benachbarte Kanäle zuzuordnen. Es ist aber auch eine funktionelle verbindungsorientierte Zuordnung möglich.

Bei dem Modul MM1 sind aus Gründen der Übersichtlichkeit lediglich zwei Add-Drop-Anschlüsse 24 und 25 bezeichnet. Die auszusendenden Kanäle dieses Moduls werden in einem WDM-Multiplexer 13 zusammengefaßt. Das Modul weist ein manuelles Schaltfeld 6 auf, mit dem beliebige Verbindungen mit Hilfe von sogenannnten "Patchcourts" von Hand gesteckt werden können. Die Module M2 und M3 enthalten ebenfalls jeweils einen WDM-Demultiplexer 3 bzw. 4, ein manuelles Schaltfeld 7 bzw. 8 und einen WDM-Multiplexer 14 bzw. 15. Lediglich das vierte Modul weist zwischen seinem WDM-Demultiplexer 5 und seinem WDM-Multiplexer 16 ein fernkonfigurierbares Schaltfeld 9 mit mehreren Schaltmatrizen 10 mit jeweils vier Anschlüssen auf. Jede dieser Schaltmatrizen gestattet es, einen vom WDM-Demultiplexer 5 separierten "Kanal" durchzuschalten oder abzuzweigen und einen entsprechenden "Kanal" einzufügen. Der Drop-Anschluß eines von zwei dargestellten Schaltmatrizen ist hier mit 11 und der Add-Anschlüsse mit 12 bezeichnet. Die mit Hilfe der WDM-Multiplexer 13 bis 16 neu konfigurierten Kanalgruppen N1 bis N4 werden von einem Kombinationsfilter 17 zusammengefaßt und ausgesendet.

Durch Austausch von Modulen kann jeder Add-Drop-Multiplexer den Erfordernissen angepaßt werden. Wird beispielsweise ein höherer Anteil von fernkonfigurierbaren Verbindungen gewünscht, kann beispielsweise das Modul MM3 durch einen Typ des Moduls MF4 ersetzt werden. Aus Gründen der Übersichtlichkeit wurden nur für eine Übertragungsrichtung und nur die für die Erfindung wesentlichen Elemente dargestellt. Bei bidirektionalen Verbindungen ist eine gleiche Anordnung für die Gegenrichtung vorgesehen.

In optischen Ringen, in denen diese Netzelemente eingesetzt werden, kann sowohl ein echter Ringverkehr geführt werden, wie er von den Synchronnetzen bekannt ist. Es kann aber auch entsprechend **Figur 3** ein sogenannter HUB-Verkehr durchgeführt werden, bei den unterschiedliche Add-Drop-Multiplexer benötigt werden, die über Lichtwellenleiter 28 und 29 ringförmig verbunden sind. Eine erste Add-Drop-Multiplexereinrichtung NK1 dient als zentraler Knoten (Master-Knoten), der logisch den Verkehr doppelsternförmig auf die anderen Add-Drop-Multiplexer verteilt. Der Master-Knoten muß entsprechend eine Add-Drop-Kapazität von 100% besitzen, wie in Figur 1 dargestellt ist, mit (beispielsweise entsprechend Figur 1) 75% statischem und 25% fernkonfigurierbarem Verkehr. Die anderen Multiplexer/Netzknoten NK2, NK3 und NK4 benötigen nur eine relativ geringe Add-Drop-Kapazität, von der wiederum nur ein Teil fernkonfigurierbar sein muß. Ein wesentlicher Teil des Verkehrs konzentriert auf bestimmte Kanalgruppen wird durchgeschaltet.

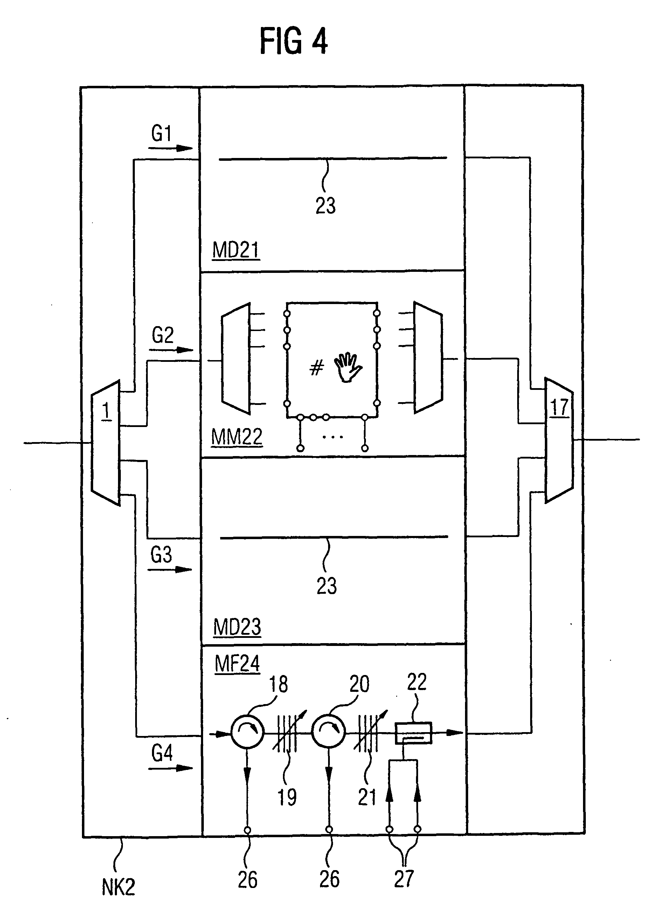

Eine für die Netzknoten NK2 bis NK 4 mögliche Add-Drop-Multiplexereinrichtung ist in **Figur 4** dargestellt. Sie enthält zwei Module MD21 und MD23, die jeweils aus einer optischen Verbindungsleitung 23 bestehen. Ein weiteres Modul MM22 ist wiederum für statische Verbindungen und das Modul MF24 ist für fernkonfigurierbare Verbindungen vorgesehen. Dieses Modul enthält mindestens einen Zirkulator 18 und ein abstimmbares Filter 19, mit dessen Hilfe einzelne Wellenlängen und damit einzelne Kanäle abgezweigt werden können. Mit Hilfe von weiteren Zirkulatoren 20 und abstimmbaren Filtern 21 können weitere Kanäle (oder auch Gruppen von mehreren Kanälen) an Drop-Ausgängen 26 abgezweigt werden. Die entsprechenden Kanäle (mit neuen Daten) werden über Add-Eingänge 27 und einen Koppler 22 eingefügt.

Besonders vorteilhaft ist es, wenn das Modul MF24 so ausgestaltet ist, daß während einer Neukonfiguration, d.h. bei einer Verstimmung der Filter 19 und 21 die anderen durchgeschalteten Kanäle nicht gestört werden. Dies kann durch Überbrücken der Filter oder durch thermische Beeinflussung der Filter erfolgen, durch die die Filtereigenschaften weitgehend reduziert werden. Entsprechende Filter und entsprechende Add-Drop-Continue-Module sind in der deutschen Patentanmeldung DE 19846674.9 beschrieben. Das Modul MM22, das Gruppenfilter und das Kombinationsfilter stimmen mit dem Netzknoten NK1 überein.

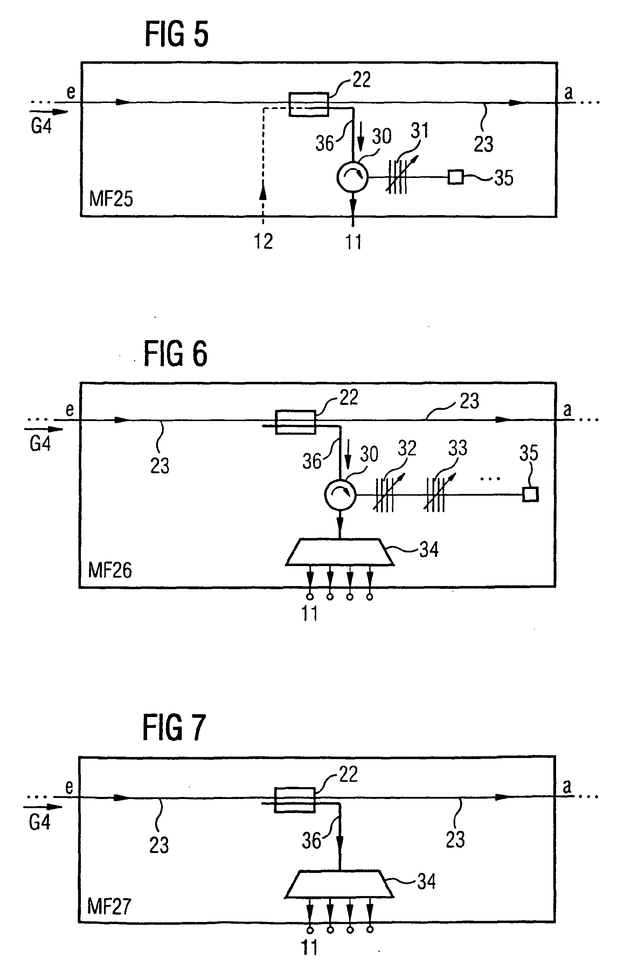

In **Figur 5** ist eine Variante eines Drop&Continue-Moduls MF25 für fernkonfigurierbare Drop&Continue-Kanäle dargestellt, das einen Koppler 22, einen Zirkulator 30, ein abstimmbares Filter 31 sowie einen Absorber 35 aufweist. Die Continue-Funktionalität des Drop&Continue-Moduls MF25 wird mit Hilfe einer optischen Verbindungsleitung 23 realisiert, die den Eingang e des Drop&Continue-Moduls MF25 über den Koppler 22 mit dem Ausgang a des Drop&Continue-Moduls MF25 verbindet und über die beispielsweise sämtliche kurzfristigen Verbindungen der vierten Kanalgruppe G4 übertragen werden. Die Drop-Funktionalität des Drop&Continue-Moduls MF25 wird insbesondere mit Hilfe des Kopplers 22, des abstimmbaren Filters 31 und des Zirkulators 30 realisiert, wobei durch den Koppler 22 ein Teil des die vierte Kanalgruppe G4 repräsentierenden optischen WDM-Signals ausgekoppelt und über eine weitere optische Verbindungsleitung 36 an den Zirkulator 30 übertragen wird. Über das abstimmbare Filter 31 läßt sich somit ein einzelner Kanal, beispielsweise Kanal K25, der Kanalgruppe G4 abzweigen. Der nicht durch das abstimmbare Filter 31 separierte Teil des ausgekoppelten, die vierte Kanalgruppe G4 repräsentierenden optischen WDM-Signals wird an den optischen Absorber 35 weitergeleitet, der zur Entsorgung dieser nicht reflektierten WDM-Kanäle K26 bis K32 vorgesehen ist. Zusätzlich kann optional das Drop&Continue-Modul MF25 mit Hilfe eines Add-Anschlusses 12, der an den Koppler 22 geführt ist, zu einem Add-Drop&Continue-Modul erweitert werden - in Figur 5 durch eine strichliert gezeichnete Add-Anschlußleitung 12 angedeutet. Hierbei können nur WDM-Signale eingespeist bzw. "geadded" werden, deren Wellenlänge außerhalb des durch das abstimmbare Filter 31 ausblendbaren Wellenlängenbereiches liegen.

In **Figur 6** ist ein zur Abzweigung von mehreren Kanälen K25 bis K32 der vierten Kanalgruppe G4 erweitertes Modul MF26 des in Figur 5 dargestellten Drop&Continue-Moduls MF25 dargestellt. Dieses erweiterte Modul MF26 weist hierzu beispielsweise ein weiteres abstimmbares Filter 33 und ein zur Trennung der rückgestreuten Kanäle K25 bis K32 vorgesehener WDM-Demultiplexer 34 auf. Mit Hilfe dieses erweiterten Moduls MF26 können vorteilhaft die Kanaltrennschärfe des Drop&Continue-Moduls MF26 erhöht werden, welches bei einer großen Anzahl von WDM-Kanälen vorteilhaft ist.

In **Figur 7** ist eine vereinfachte Realisierung der Drop&Continue-Funktionalität in einem weiteren Modul MF27 dargestellt, bei dem mit Hilfe eines Kopplers 22, der in die optische Verbindungsleitung 23 eingeschaltet ist, über eine optische Verbindungsleitung 36 ein Teil des die vierte Kanalgruppe G4 repräsentierenden optischen WDM-Signals unmittelbar an einen WDM-Multiplexer 34 geführt wird. Mit Hilfe des WDM-Multiplexers 36 werden anschließend der jeweilige WDM-Kanal K25 bis K32 abgezweigt und an den jeweiligen Drop-Anschluß 11 geführt. Eine derartige Realisierung eines Drop&Continue-Moduls kann insbesondere vorteilhaft bei einer geringen Kanaldichte pro Kanalgruppe G1 bis G4 eingesetzt werden.

Selbstverständlich können in einem Netzterminal auch mehrere der vorstehend beschriebenen Add-Drop-Multiplexer in Kette geschaltet werden.

## Patentansprüche

1. Add-Drop-Multiplexereinrichtung für ein optisches Wellenlängen-Multiplex-Übertragungssystem,
**dadurch gekennzeichnet,**
**dass die** Add-Drop-Multiplexereinrichtung ein Gruppenfilter (1) **aufweist,** das ein ankommendes WDM-Signal (WMS1) in mehrere Kanalgruppen (G1 - G4) mit Kanälen (K1 - K32) unterschiedlicher Wellenlängen aufteilt,
**dass** mehrere Module (M1 - M4) zum Durchschalten und Abzweigen von Kanälen **jeweils einer Kanalgruppe (G1** - **G4)** vorgesehen sind,
**dass** mehrere Modultypen (MM, MD, MF) vorgesehen sind, die bedarfsweise einsetzbar sind,
**dass** ein erster Modultyp (MM) vorgesehen ist, der eine manuelle Neukonfiguration von durchgeschalteten und von Add-Drop-Kanälen (K1 - K8) ermöglicht und jeweils Langzeitverbindungen der Kanäle (K1- K8) einer Kanalgruppen (G1, ...) konfiguriert,
**dass** ein zweiter Modultyp (MF) vorgesehen ist, der eine Fernkonfiguration von durchgeschalteten Kanälen und Add-Drop-Kanälen (K25 - K32) mindestens einer weiteren Kanalgruppe **(G4) ermöglicht und Kurzzeitverbindungen der Kanäle (K25 - K32) dieser weiteren Kanalgruppe (G4) realisiert,**
**dass** ein dritter Modultyp (MD) vorgesehen ist, der jeweils eine Kanalgruppe (G3) geschlossen durchschaltet, und dass ein Kombinationsfilter (17) vorgesehen ist, dem die gegebenenfalls neu konfigurierten Kanalgruppen (N1 - N4) zugeführt werden, die zu einem abgehenden WDM-Signal (WMS2) zusammengefasst werden.

2. Add-Drop-Multiplexereinrichtung nach Anspruch 1,
**dadurch gekennzeichnet,**
**dass** der erste Modultyp (MM) im wesentlichen einen WDM-Demultiplexer (2), ein manuell konfigurierbares Koppelfeld (6) und einen WDM-Multiplexer (13) enthält.

3. Add-Drop-Multiplexereinrichtung nach Anspruch 1 oder 2,
**dadurch gekennzeichnet,**
**dass** der zweite Modultyp (MF) einen WDM-Demultiplexer (5), ein fernkonfigurierbares Koppelfeld (9) und einen WDM-Multiplexer (16) enthält.

4. Add-Drop-Multiplexereinrichtung nach Anspruch 1 oder 2,
**dadurch gekennzeichnet,**
**dass** der zweite Modultyp (MF) eine Add-Drop-Continue-Einrichtung mit mindestens einem Zirkulator (18) und einem abstimmbaren Filter (19) sowie eine Einkoppeleinrichtung (20) enthält.

5. Add-Drop-Multiplexereinrichtung nach Anspruch 4,
**dadurch gekennzeichnet,**
**dass** die Durchlassdämpfung des Filters (19) einstellbar ist.

6. Add-Drop-Multiplexereinrichtung nach Anspruch 5,
**dadurch gekennzeichnet,**
**dass** die Durchlassdämpfung des Filters (19) thermisch einstellbar ist.

7. Add-Drop-Multiplexereinrichtung nach einem der vorhergehenden Ansprüche,
**dadurch gekennzeichnet,**
**dass** als dritter Modultyp (MD) ein optisches Verbindungskabel (23) vorgesehen ist.

8. Add-Drop-Multiplexereinrichtung nach einem der vorhergehenden Ansprüche,
**dadurch gekennzeichnet,**
**dass** die Kanäle einer Kanalgruppe frequenzmäßig benachbart sind.

9. Wellenlängenmultiplex-Übertragungssystem mit mehreren über Lichtwellenleiter (28, 29) miteinander verbundenen Add-Drop-Multiplexereinrichtung (NK1 - NK4) nach einem der vorhergehenden Ansprüche.

## Claims

1. Add-drop multiplexing device for an optical wavelength division multiplex transmission system, **characterized in that** the add-drop multiplexing device has a group filter (1), which divides an incoming WDM signal (WMS1) into a plurality of channel groups (G1-G4) with channels (K1-K32) of different wavelengths, **in that** there is provided a plurality of modules (M1-M4) for connecting through and branching off channels in each case of a channel group (G1-G4), **in that** there is provided a plurality of module types (MM, MD, MF), which can be used as and when required, **in that** there is provided a first module type (MM), which makes possible a manual reconfiguration of connected-through and add-drop channels (K1 - K8) and configures in each case long-term connections of the channels (K1-K8) of a channel group (G1, ...), **in that** there is provided a second module type (MF), which makes possible a remote configuration of connected-through channels and add-drop channels (K25 - K32) of at least one further channel group (G4), and short-term connections of the channels (K25-K32) of this further channel group (G4) are realized, **in that** there is provided a third module type (MD), which in each case connects through a channel group (G3) as a closed unit, and **in that** there is provided a combination filter (17), to which the possibly reconfigured channel groups (N1-N4), which are combined to form an outgoing WDM signal (WMS2), are fed.

2. Add-drop multiplexing device according to Claim 1, **characterized in that** the first module type (MM) contains essentially a WDM demultiplexer (2) a manually configurable switching unit (6) and a WDM multiplexer (13).

3. Add-drop multiplexing device according to Claim 1 or 2, **characterized in that** the second module type (MF) contains a WDM demultiplexer (5) a remote-configurable switching unit (9) and a WDM multiplexer (16).

4. Add-drop multiplexing device according to Claim 1 or 2, **characterized in that** the second module type (MF) contains an add-drop-continue device with at least one circulator (18) and a tunable filter (19) and also a coupling-in device (20).

5. Add-drop multiplexing device according to Claim 4, **characterized in that** the transmission loss of the filter (19) is adjustable.

6. Add-drop multiplexing device according to Claim 5, **characterized in that** the transmission loss of the filter (19) is thermally adjustable.

7. Add-drop multiplexing device according to one of the preceding claims, **characterized in that** an optical connecting cable (23) is provided as the third module type (MD).

8. Add-drop multiplexing device according to one of the preceding claims, **characterized in that** the channels of a channel group are adjacent in terms of frequency.

9. Wavelength division multiplex transmission system with a plurality of add-drop multiplexing devices (NK1 - NK4) according to one of the preceding claims connected to one another via optical waveguides (28, 29).

## Revendications

1. Dispositif multiplexeur à insertion / extraction pour un système de transmission optique par multiplexage en longueur d'onde, **caractérisé en ce que**
- le dispositif multiplexeur à insertion /extraction comporte un filtre de groupe (1) qui répartit un signal WDM entrant (WMS1) sur plusieurs groupes de canaux (G1 - G4) avec des canaux (K1 - K32) de différentes longueurs d'ondes,
- plusieurs modules (M1 - M4) sont prévus pour l'interconnexion et la dérivation de canaux de respectivement un groupe de canaux (G1 - G4),
- plusieurs types de modules (MM, MD, MF) sont prévus, lesquels peuvent être mis en oeuvre selon les besoins,
- un premier type de module (MM) est prévu, lequel permet une reconfiguration manuelle de canaux interconnectés et de canaux d'insertion / extraction (K1 - K8) et configure respectivement des liaisons de longue durée des canaux (K1 - K8) d'un groupe de canaux (G1, ...),
- un deuxième type de module (MF) est prévu, lequel permet une configuration à distance de canaux interconnectés et de canaux d'insertion / extraction (K25 - K32) d'au moins un autre groupe de canaux (G4) et réalise des liaisons de courte durée des canaux (K24 - K32) de cet autre groupe de canaux (G4),
- un troisième type de module (MD) est prévu, lequel interconnecte respectivement un groupe de canaux (G3) en entier et
- un filtre combiné (17) est prévu, sur lequel sont envoyés les groupes de canaux le cas échéant reconfigurés (N1 - N4) qui sont regroupés en un signal WDM sortant (WMS2).

2. Dispositif multiplexeur à insertion / extraction selon la revendication 1, **caractérisé en ce que** le premier type de module (MM) contient, pour l'essentiel, un démultiplexeur (WDM) (2), un champ de couplage configurable manuellement (6) et un multiplexeur WDM (13).

3. Dispositif multiplexeur à insertion / extraction selon la revendication 1 ou 2, **caractérisé en ce que** le deuxième type de module (MF) contient un démultiplexeur (WDM) (5), un champ de couplage configurable à distance (9) et un multiplexeur WDM (16).

4. Dispositif multiplexeur à insertion / extraction selon la revendication 1 ou 2, **caractérisé en ce que** le deuxième type de module (MF) contient un dispositif d'insertion / extraction / suite avec au moins un circulateur (18) et un filtre accordable (19) ainsi qu'un dispositif de couplage (20).

5. Dispositif multiplexeur à insertion / extraction selon la revendication 4, **caractérisé en ce que** l'atténuation de passage du filtre (19) est réglable.

6. Dispositif multiplexeur à insertion / extraction selon la revendication 4, **caractérisé en ce que** l'atténuation de passage du filtre (19) est réglable thermiquement.

7. Dispositif multiplexeur à insertion / extraction selon l'une des revendications précédentes, **caractérisé en ce qu'**est prévu, en tant que troisième type de module (MD), un câble de liaison optique (23).

8. Dispositif multiplexeur à insertion / extraction selon l'une des revendications précédentes, **caractérisé en ce que** les canaux d'un groupe de canaux sont voisins en fréquence.

9. Système de transmission par multiplexage en longueur d'onde avec plusieurs dispositifs multiplexeurs à insertion / extraction (NK1 - NK4) selon l'une des revendications précédentes, reliés entre eux par l'intermédiaire de guides de lumière (28, 29).
